# EUROPÄISCHE PATENTSCHRIFT

(11) **EP 2 227 672 B1**
(45) Veröffentlichungstag und Bekanntmachung des Hinweises auf die Patenterteilung: **19.06.2013**
(21) Anmeldenummer: 09745437.5
(22) Anmeldetag: 21.04.2009
(51) Int. Cl.: G01B 21/04, G01B 21/08

(54) **VERFAHREN ZUM KALIBRIEREN EINER DICKENMESSEINRICHTUNG**
METHOD FOR CALIBRATING A THICKNESS GAUGE
PROCÉDÉ D ÉTALONNAGE D UN APPAREIL SERVANT À MESURER L ÉPAISSEUR

(30) Priorität: 16.05.2008 DE 102008023987; 03.03.2009 DE 102009011122
(43) Veröffentlichungstag der Anmeldung: 15.09.2010
(73) Patentinhaber: Micro-Epsilon Messtechnik GmbH & Co. KG, 94496 Ortenburg (DE)
(72) Erfinder: SCHALLMOSER, Günter, 94099 Ruhstorf (DE); WISSPEINTNER, Karl, 94496 Ortenburg (DE); WAGNER, Robert, 94127 Neuburg am Inn (DE)
(74) Vertreter: Ullrich & Naumann
(86) Internationale Anmeldenummer: PCT/DE2009/000517
(87) Internationale Veröffentlichungsnummer: WO 2009/138053

(56) Entgegenhaltungen:
- WO-A-91/15733
- WO-A-99/44012
- DE-A1- 4 407 215
- JP-A- 2006 189 389
- US-A- 5 798 836

## Beschreibung

Die Erfindung betrifft ein Verfahren zum Kalibrieren einer Dickenmesseinrichtung, wobei die Dickenmesseinrichtung die Dicke eines Messobjekts in einer vorgebbaren Messrichtung misst, mit mindestens einem berührungslos oder tastend arbeitenden Wegmesssensor, wobei ein Referenzobjekt mit bekannter Dicke und Form in zumindest einen Teilbereich des Messfelds des mindestens einen Wegmesssensors verbracht wird.

Aus der DE 40 11 717 A1 ist ein Verfahren zum Kalibrieren einer Dickenmesseinrichtung mit zwei berührungslos oder tastend arbeitenden Wegmesssensoren bekannt, wobei ein Referenzobjekt mit bekannter Dicke in das Messfeld der Wegmesssensoren verbracht wird. Bei dem bekannten Verfahren messen beispielsweise zwei Sensoren von der Oberseite und der Unterseite des Referenzobjekts aus jeweils den Abstand zu der Oberseite bzw. Unterseite des Referenzobjekts in einer vorgegebenen Messrichtung. Diese beiden unabhängigen Messwerte in Form der ermittelten Abstandswerte werden von dem bekannten Abstand der Sensoren voneinander abgezogen, so dass sich die Dicke des Referenzobjekts ergibt. Da die Sensoren üblicherweise Nichtlinearitäten im Messverhalten zeigen, wird das Referenzobjekt in Achsrichtung der Sensoren, d.h. in der Messrichtung, zwischen den Sensoren hin- und herbewegt, so dass in Abhängigkeit von der Position des Referenzobjekts mehrere Dickenmessungen durchgeführt werden können. Mit anderen Worten können in beliebig vielen Relativlagen des Referenzobjekts der Abstand zwischen den Wegmesssensoren und dem Referenzobjekt bzw. die Dicke des Referenzobjekts gemessen und für jede Relativlage die sich aus der Unlinearität der Wegmesssensoren ergebende Abweichung der Sensormesswerte von der vorgegebenen bekannten Dicke des Referenzobjekts als dem jeweiligen Sensormesswert zugeordneter Messfehler aufgenommen und gespeichert werden. Damit können bei einer nachfolgenden Dickenmessung eines beliebigen Objekts die Unlinearitäten der Wegmesssensoren über den gesamten Messbereich hinweg kompensiert werden.

Aus der US-5798836 ist eine Dickenmessung mit Verkippungskorrektur bekannt.

Bei dem bekannten Verfahren ist problematisch, dass es bei der Kalibrierung von großer Bedeutung ist, dass das Referenzobjekt stets sehr exakt und ohne Verkippungen in Achsrichtung der gegenüberliegenden Sensoren hin- und herbewegt werden muss. Eine Verkippung des Referenzobjekts verursacht nämlich eine ganz erhebliche Verfälschung der Messwerte in Abhängigkeit von dem Verkippungswinkel. Bei einem verkippten Referenzobjekt wird eine deutlich größere vermeintliche Dicke gemessen als bei einem unverkippten Referenzobjekt. Eine Verkippung von nur 5° hat bereits einen Messfehler von 0,38 % zur Folge, was für viele Präzisionsmessungen schon erheblich zu viel ist, wo beispielsweise Schichtdicken von Bändern, Folien oder dgl. überwacht werden.

Zur Gewährleistung einer exakten Kalibrierung und Messung müsste daher sowohl das Referenzobjekt als auch das eigentliche Messobjekt exakt parallel geführt werden, was in der Praxis nur sehr schwierig oder häufig sogar unmöglich ist.

Ein weiterer Nachteil des bekannten Verfahrens besteht darin, dass geringfügig unterschiedliche Dicken des Referenzobjekts, die beispielsweise aufgrund der Oberflächenrauhigkeit oder aufgrund lokaler Unebenheiten auftreten, die Kalibrierung verfälschen.

Der vorliegenden Erfindung liegt daher die Aufgabe zugrunde, ein Verfahren zum Kalibrieren einer Dickenmesseinrichtung anzugeben, mit dem eine besonders genaue und einfache Kalibrierung ermöglicht ist.

Die voranstehende Aufgabe ist durch ein Verfahren mit den Merkmalen des Patentanspruchs 1 gelöst. Danach ist ein Verfahren zum Kalibrieren einer Dickenmesseinrichtung beansprucht, wobei die Dickenmesseinrichtung die Dicke eines Messobjekts in einer vorgebbaren Messrichtung misst. Die Dickenmesseinrichtung weist mindestens einen berührungslos oder tastend arbeitenden Wegmesssensor auf, wobei ein Referenzobjekt mit bekannter Dicke und Form in zumindest einen Teilbereich des Messfelds des mindestens einen Wegmesssensors verbracht wird. Als erster Verfahrensschritt erfolgt ein Aufnehmen mindestens zweier unabhängiger Messwerte durch den mindestens einen Wegmesssensor an mindestens zwei vorgebbaren Orten auf einer ersten Oberfläche des Referenzobjekts, und zwar zu vorgebbaren Zeitpunkten tⱼ oder in Abhängigkeit von vorgebbaren Positionen pⱼ des Referenzobjekts im Messfeld. Als nächstes erfolgt ein Feststellen der Verkippung oder räumlichen Lage des Referenzobjekts im Messfeld aus den zuvor aufgenommenen Messwerten zu den Zeitpunkten tⱼ oder in Abhängigkeit von den Positionen pⱼ des Referenzobjekts. Anschließend oder auch im Wesentlichen gleichzeitig mit der Aufnahme der vorherigen Messwerte erfolgt ein Aufnehmen eines weiteren Messwerts durch den mindestens einen Wegmesssensor an einem in der Messrichtung gelegenen weiteren Ort auf einer der ersten Oberfläche entgegengesetzten zweiten Oberfläche oder auf einem der ersten Oberfläche entgegengesetzten Oberflächenbereich des Referenzobjekts, um einen Dickenwert des Referenzobjekts in der Messrichtung zu ermitteln. Danach erfolgt das Berechnen eines Dickenwerts des Referenzobjekts aus den Messwerten des mindestens einen Wegmesssensors zu den Zeitpunkten tⱼ oder in den Positionen pⱼ in der Messrichtung. Schließlich erfolgt ein Berechnen der Differenz zwischen dem berechneten Dickenwert und der bekannten Dicke des Referenzobjekts zum Erhalt von positions- und verkippungs- oder lageabhängigen Korrekturwerten in dem Teilbereich oder Messfeld, um bei einer Dickenmessung geometrische Fehler und/oder Unlinearitäten des mindestens einen Wegmesssensors in dem Teilbereich oder Messfeld kompensieren zu können.

Bei dem erfindungsgemäßen Verfahren erfolgt im Gegensatz zu dem bekannten Verfahren nicht nur eine punktförmige Messung und Kalibrierung, sondern eine Kalibrierung aufgrund mehrdimensional aufgenommener Messwerte:
Im einfachsten Fall werden zunächst zwei unabhängige Messwerte an zwei vorgebbaren Orten auf einer ersten Oberfläche des Referenzobjekts aufgenommen. Aus diesen beiden Messwerten kann eine Verkippung in einer Ebene festgestellt werden. Die Messwerte werden zu vorgebbaren Zeitpunkten tⱼ oder in Abhängigkeit von der Position pⱼ des Referenzobjekts aufgenommen.

Mittels des mindestens einen Wegmesssensors wird dann ein weiterer Messwert aufgenommen, der quasi von der der Oberfläche entgegengesetzten Seite des Referenzobjekts stammt, so dass die Dicke des Referenzobjekts in der Messrichtung bestimmt werden kann. Die Aufnahme dieses weiteren Messwerts erfolgt auch zum Zeitpunkt tⱼ, falls eine Messung zu vorgebbaren Zeitpunkten tⱼ erfolgen soll, damit der weitere Messwert mit den zuvor auf der ersten Oberfläche aufgenommenen Messwerten korreliert. Falls die Messung in Abhängigkeit von vorgebbaren Positionen pⱼ des Referenzobjekts im Messfelds erfolgen soll, könnte das Aufnehmen des weiteren Messwerts auch zu einem späteren Zeitpunkt erfolgen. Allerdings muss sich das Referenzobjekts dann in der gleichen Position pⱼ wie bei der Aufnahme der Messwerte auf der ersten Oberfläche befinden.

Aus den ermittelten Messwerten wird nun der Dickenwert des Referenzobjekts zu den Zeitpunkten tⱼ oder in den Positionen pⱼ in der Messrichtung berechnet.

Abschließend erfolgt das Berechnen der Differenz zwischen dem berechneten Dickenwert und der bekannten Dicke des Referenzobjekts, um die gewünschten Korrekturwerte für die Kalibrierung zu erhalten.

Bei dem erfindungsgemäßen Verfahren ist des Weiteren zu bemerken, dass zur Bestimmung einer Verkippung im Raum bei einer quasi zweidimensionalen Aufnahme der Messwerte letztendlich zwei Messwerte genügen, die auch von beispielsweise zwei Punkt-Sensoren geliefert werden. Dabei gilt die Regel, dass zwei Messpunkte genügen, um eine Gerade zu definieren. Ein Linienscanner ist hierfür nicht erforderlich.

Analog gilt dies für die quasi dreidimensionale Aufnahme von Messwerten, wobei hier letztendlich drei Messwerte genügen, die durch drei Punkt-Sensoren geliefert werden können. Dabei gilt, dass eine Fläche durch mindestens drei Punkte bereits vollständig definiert ist. Beispielsweise können sich auf der Oberseite und/oder auf der Unterseite eines Referenzobjekts oder Messobjekts jeweils zwei Laser-Triangulations-Sensoren befinden. Damit kann die Neigung in eine Richtung schon bestimmt werden. Mit jeweils drei Sensoren kann sogar die Lage im Raum bestimmt werden.

Das erfindungsgemäße Verfahren funktioniert mit mindestens einem und damit auch mit nur einem Wegmesssensor, der mindestens zwei unabhängige Messwerte liefert. Beispielsweise kann bei transparenten Medien - beispielsweise Glasplatte oder Kunststofffolie - durch einen optischen Scanner, beispielsweise ein Laser-Linienscanner oder auch konfokaler Linienscanner, ein Signal in Form eines Lichtpunkts auf der Detektorzeile sowohl von der Oberseite des Materials oder Mediums als auch von der Unterseite erhalten werden. Dies funktioniert auch bei nichttransparenten Medien, beispielsweise durch Verwendung eines Spiegels, so dass Signale von der Ober- und Unterseite auf ein und denselben Linsenscanner projiziert werden können. Auch mit anderen Messprinzipien könnten bei nichttransparenten Medien Signale von Ober- und Unterseite mit nur einem Sensor erhalten werden, wobei hier Ultraschall- oder Röntgenverfahren in Frage kommen könnten.

Bei dem erfindungsgemäßen Verfahren bedeutet der Index j bei den Zeitpunkten tⱼ und Positionen pⱼ eine natürliche Zahl, die laufende Zeitpunkte oder Positionen kennzeichnet.

Mit dem erfindungsgemäßen Verfahren ist auf einfache Weise eine Kalibrierung möglich, die auch bei verkippten Referenzobjekten korrekte Kalibrierungswerte ergibt. Letztendlich ist mit dem erfindungsgemäßen Verfahren eine von der Verkippung unabhängige Kalibrierung möglich. Eine exakt parallele Führung eines Referenzobjekts während der Kalibrierung ist nicht mehr erforderlich.

Folglich ist mit dem erfindungsgemäßen Verfahren ein Verfahren angegeben, mit dem eine besonders genaue und einfache Kalibrierung ermöglicht ist.

Bei einem konkreten Verfahrensverlauf könnte das Referenzobjekts innerhalb zumindest eines Teilbereichs des Messfelds bewegt werden, so dass in unterschiedlichsten Positionen oder zu unterschiedlichsten Zeitpunkten bei einem Bewegungsverlauf des Referenzobjekts im Messfeld sich eine Vielzahl von Korrekturwerten für die jeweilige Position und Lage oder Verkippung des Referenzobjekts ergeben. Je mehr Werte aufgenommen werden, desto mehr Korrekturwerte können erzeugt werden und desto genauer wird eine anschließende Dickenmessung an einem Messobjekt.

Bei dem Verfahren können die Messwerte in Form von Wertepaaren ((xᵢ¹⁻; zᵢ¹), (xᵢ²; zᵢ²)) bei Feststellung der Verkippung des Referenzobjekts in einer vorgebbaren Ebene aufgenommen werden. Diese Wertepaare beziehen sich auf voneinander unabhängige Messwerte von Sensoren 1 und gegebenenfalls 2 an beliebig vielen und mindestens zwei Messpunkten i, die durch x- und z-Koordinaten bezeichnet sind.

Bei Feststellung der dreidimensionalen räumlichen Lage des Referenzobjekts werden Wertetripel ((xᵢ¹⁻; yᵢ¹; zᵢ¹), (xᵢ²; yᵢ²; zᵢ²)) aufgenommen, wobei der obige Index wiederum eine Sensor-Nummer und der untere Index i eine laufende Messwert-Nummer bezeichnen. Entsprechend beziehen sich die Wertetripel (xᵢ¹; yⱼ¹; zᵢ¹) und (xᵢ²; yᵢ²; zᵢ²) auf voneinander unabhängige Messwerte von Sensoren 1 bzw. 2 an beliebig vielen und mindestens zwei Messpunkten i, die durch x-, y- und z-Koordinaten bezeichnet sind. Die Messwerte werden in Abhängigkeit von der Position pⱼ des Referenzobjekts oder alternativ hierzu zu vorgebbaren Zeitpunkten tⱼ aufgenommen. Die Messwertaufnahme zu vorgebbaren Zeitpunkten tⱼ bedeutet, dass zur Berechnung der Dicke des Referenzobjekts beispielsweise die Wertepaare (xᵢ¹; zᵢ¹) und (xᵢ²; zᵢ²) verwendet werden müssen, die zum selben Zeitpunkt tⱼ aufgenommen worden sind. Entsprechendes gilt hinsichtlich der Wertetripel, die bei der Berechnung der Dicke des Referenzobjekts zu dem vorgebbaren Zeitpunkt tⱼ aufgenommen worden sind.

Das erfindungsgemäße Verfahren zum Kalibrieren einer Dickenmesseinrichtung bildet die Basis für eine sehr genaue Messung von beliebigen Messobjekten. Nach der Durchführung der obigen Kalibrierung und der entsprechenden Aufnahme und Ermittlung von Korrekturwerten könnte eine Dickenmessung an einem Messobjekt entsprechend der obigen Messwertaufnahme, Verkippungs- oder Lagefeststellung und Dickenwertberechnung durchgeführt werden, wobei eine Korrektur des Dickenwerts mit den Korrekturwerten erfolgen könnte. Die Messwertaufnahme erfolgt dabei analog zum Kalibrierungsverfahren, wobei ebenfalls Wertepaare oder Wertetripel zu vorgebbaren Zeitpunkten oder in Abhängigkeit von der Position des Messobjekts aufgenommen werden können. Auch die Feststellung der Verkippung oder Lage des Messobjekts und die Dickenwertberechnung erfolgen in analoger Weise, wobei die berechneten Dickenwerte mit den Korrekturwerten korrigiert werden.

Die Kompensation geometrischer Fehler könnte in vorteilhafter Weise die Kompensation eines Winkelfehlers, der insbesondere bei Lasersensoren bei seitlichem Auftreffen auf das Referenzobjekt und/oder Messobjekt auftritt umfassen. Auch andere geometrische Fehler könnten hierdurch kompensiert werden.

In vorteilhafter Weise könnte die Aufnahme der Messwerte entlang einer Linie oder Fläche oder Form des Referenzobjekts und/oder Messobjekts erfolgen. Eine derartige Linie muss nicht unbedingt eine Gerade sein. Beispielsweise ist eine Linie bei der Verwendung eines Laserscanners die Schnittlinie des Lichtfächers mit dem Referenz- oder Messobjekt, die bei strukturierten Objekten natürlich keine Gerade ist, sondern die Oberflächenkontur in der Schnittlinie darstellt.

Die Feststellung der Verkippung oder Lage des Referenzobjekts und/oder Messobjekts im Raum könnte somit das Feststellen der Verkippung oder Lage einer Linie oder einer Fläche des Referenzobjekts und/oder Messobjekts sein. Im Konkreten könnte das Feststellen der Verkippung oder Lage des Referenzobjekts und/oder Messobjekts das Feststellen der Verkippung oder Lage der Linie oder Fläche umfassen.

Je nach Erfordernis könnte das Feststellen der Verkippung oder Lage in absoluten Koordinaten erfolgen. Alternativ oder zusätzlich hierzu könnte das Feststellen der Verkippung oder Lage relativ zu mindestens einem der Wegmesssensoren erfolgen.

Im Konkreten könnte das Feststellen der Verkippung oder Lage die Bestimmung eines Kippwinkels umfassen, um den das Referenzobjekt relativ zu einem Wegmesssensor geneigt ist.

Es könnte jedoch nicht nur der Kippwinkel oder die Verkippung oder Lage des Referenzobjekts oder Messobjekts relativ zu einem Sensor bestimmt werden, sondern es könnte - mit einem geeignet strukturierten Referenzobjekt - auch die relative Verkippung oder Lage zweier Sensoren untereinander und/oder zum Referenzobjekt oder Messobjekt bestimmt werden.

Das Feststellen der Verkippung oder Lage könnte anhand der aufgenommenen Messwerte selbst erfolgen. Zur Feststellung einer Verkippung genügen im Fall einer Messung entlang einer Linie zwei Messpunkte, aus denen eine Verkippung bzw. ein Kippwinkel errechnet werden kann. Bei der Aufnahme der Messwerte entlang einer Fläche genügen letztendlich drei Messpunkte, um die Lage und auch Verkippung der Fläche im Raum zu bestimmen.

In besonders einfacher Weise könnten die Korrekturwerte in einem Speicher gespeichert werden. Alternativ hierzu könnten die Korrekturwerte als Funktion hinterlegt werden. Die Erzeugung einer derartigen Funktion ist häufig nicht sehr einfach, allerdings lässt sich hierdurch im Vergleich mit der Abspeicherung der Korrekturwerte in einem Speicher Speicherplatz sparen. Bei induktiven Sensoren ist die Erzeugung einer derartigen Funktion meist relativ einfach, da dort Fehlerfunktionen in der Regel eine S-Kurve oder eine Exponentialkurve ergeben. Bei optischen Sensoren ist die Erzeugung der Funktion allerdings meist sehr schwierig, da dort üblicherweise statistische Verteilungen der Fehler vorliegen.

Weiterhin im Hinblick auf eine besonders genaue Kalibrierung könnten vor dem Feststellen der Verkippung oder Lage des Referenzobjekts und/oder des Messobjekts eine ideale Linie g¹(xᵢ¹; zᵢ¹) und/oder g²(xᵢ²; zᵢ²) oder ideale Fläche f¹(xᵢ¹; yᵢ¹; zᵢ¹) und/oder f²(xᵢ²; yᵢ²; _{zi}²) aus den Messwerten zu jedem Zeitpunkt tⱼ oder in jeder Position pⱼ berechnet werden. Durch die Berechnung derartiger Linien oder Flächen wird der Einfluss von Oberflächenrauhigkeiten auf die Kalibrierung weitestgehend vermieden, da hierdurch quasi eine Glättung der Oberflächen des Referenzobjekts und/oder Messobjekts stattfindet. Eine derartige Berechnung der idealen Linien und/oder Flächen könnte durch Mittelwertbildung oder Interpolation erfolgen.

Bei der Berechnung der Dicke des Referenzobjekts aus den Messwerten könnten somit die idealen Linien und/oder Flächen zugrunde gelegt oder verwendet werden. Im Ergebnis ist eine besonders genaue Kalibrierung auf diese Weise möglich.

Zur Bereitstellung einer möglichst umfassenden Kalibrierung der Dickenmesseinrichtung könnte das Bewegen des Referenzobjekts innerhalb des gesamten Messfelds erfolgen. Hierdurch sind spätere Dickenmessungen an beliebigen Messobjekten innerhalb des gesamten Messfelds mit hoher Genauigkeit sichergestellt.

Das Feststellen der Verkippung oder Lage der Linie oder Fläche im Raum und damit die Lage des Referenzobjekts kann in einfacher Weise aus den aufgenommenen Messwerten erfolgen. Bei einer alternativen Ausgestaltung könnte ein Referenzsensor zum Feststellen der Verkippung oder Lage und/oder Position des Referenzobjekts und/oder Messobjekts verwendet werden. Hierdurch könnte eine besonders genaue Feststellung der Verkippung oder Lage und/oder Position erfolgen.

Als mindestens ein Wegmesssensor zur Aufnahme der Messwerte entlang einer Linie oder Fläche könnte ein Linienscanner oder ein konfokaler Scanner oder eine Kamera verwendet werden. Für die Aufnahme von Messwerten entlang einer Linie könnten beispielsweise Laser-Linienscanner eingesetzt werden, die anstelle eines Messpunkts wie beim Laser-Triangulations-Sensor oder wie beim Messtaster eine Linie auf das Messobjekt projizieren und auswerten. Damit kann die Verkippung des Referenzobjekts und/oder Messobjekts bestimmt werden, weil der Sensor eine Vielzahl von Messpunkten entlang der Linie erfasst, aus denen die Lage der Oberfläche errechnet werden kann. Mit einem Linienscanner kann dies allerdings nur in einer Richtung erfolgen. Dies ist jedoch oft ausreichend, da beispielsweise Bandmaterial im Herstellungsprozess in eine Vorzugsrichtung transportiert wird. Da das Band über Rollen geführt wird, kann eine Verkippung meist nur in Förderrichtung auftreten, beispielsweise durch Bandflattern, Banddurchhang oder Ähnliches. In diesem Fall kann mit einem der beiden oder mit beiden Linienscannern die Verkippung des Bands gemessen werden. Die Linienscanner könnten einander gegenüberliegend angeordnet sein, wobei die Linien deckungsgleich die obere und untere Oberfläche des Bands abscannen. Die Linien sind dabei so auszurichten, dass die Linie in Richtung der maximalen Verkippung verläuft. Durch die Messung der Linie mit einem Sensor ist die Lage des Bands relativ zu diesem Sensor bereits bekannt, wodurch dann die Verkippung aus dem zu messenden Dickenmesswert herausgerechnet werden kann.

Dieses Verfahren kann auch auf beliebige Verkippungen erweitert werden, indem flächenhaft messende Sensoren verwendet werden. Hierbei bieten sich Kameras an, mit denen die Lage der Oberfläche des Referenzobjekts und/oder Messobjekts im Raum bestimmt wird. Als Kamera könnte beispielsweise eine CCD-Kamera verwendet werden, die eine Matrix mit vielen Pixeln aufweist.

Zur Bereitstellung einer besonders umfassenden Kalibrierung könnten aus den ermittelten Korrekturwerten die Korrekturwerte für Zwischenbereiche linear interpoliert werden.

Jeweils mindestens ein Wegmesssensor könnte auf zwei verschiedenen Seiten des Referenzobjekts oder Messobjekts angeordnet werden. Das Referenzobjekt oder Messobjekt befindet sich dabei quasi zwischen den Sensoren. Alternativ hierzu könnten mindestens zwei Wegmesssensoren nebeneinander auf einer Seite des Referenzobjekts oder Messobjekts angeordnet werden, wobei ein Sensor den Abstand zur Oberseite und ein Sensor den Abstand zur Unterseite des Referenzobjekts messen könnte. Beispielsweise könnte mit dieser Anordnung die Schichtdicke von Isolierstoffen auf einem leitfähigen Material gemessen werden. Hierzu wären dann Sensoren unterschiedlicher Arbeitsweisen erforderlich. Beispielsweise könnte ein kapazitiver Wegmesssensor den Abstand zur Oberfläche des Isolierstoffs messen. Ein nach dem Wirbelstromprinzip arbeitender Wegmesssensor könnte durch den Isolierstoff hindurch auf die Oberfläche des elektrisch leitenden Materials messen. Die Differenz dieser beiden ermittelten Abstandswerte liefert die Dicke des Isolierstoffs. Wie bereits oben erwähnt, könnte für die obige Anwendung auch ein Sensor genügen, der zwei voneinander unabhängige Messwerte, beispielsweise von der Oberseite und der Unterseite des Referenz- und/oder Messobjekts liefert.

Bei einer besonders einfachen Kalibrierung könnte das Referenzobjekt eine konstante Dicke aufweisen. Je nach Erfordernis könnte das Referenzobjekt jedoch auch unterschiedlich dicke Bereiche aufweisen, wobei Referenzobjekte mit komplexen Formen denkbar sind. Letztendlich könnten über die bekannte Geometrie des Referenzobjekts Fehlstellungen der Wegmesssensoren innerhalb des Messaufbaus bestimmt werden.

In vorteilhafter Weise könnte - mit einem geeignet strukturierten Referenzobjekt - die relative Lage mindestens zweier Sensoren zueinander und/oder zum Referenzobjekt oder Messobjekt bestimmt werden. Hierdurch ist eine besonders vielseitige Kalibrierung und Kompensation geometrischer Fehler ermöglicht.

Bei dem erfindungsgemäßen Verfahren werden im einfachsten Fall mindestens zwei Messwerte von einer Oberfläche des Referenzobjekts benötigt, um eine Verkippung des Referenzobjekts im Raum festzustellen. Bei einer dreidimensionalen Betrachtung sind mindestens drei Messwerte von einer Oberfläche erforderlich, um die Verkippung oder Lage des Referenzobjekts räumlich festzustellen, zur Berechnung der Dicke des Referenzobjekts wird mindestens ein weiterer Messwert von der anderen Seite des Referenzobjekts oder von einer entgegengesetzten Oberfläche benötigt.

Zum Erhalt der zwei bzw. drei Messwerte auf einer ersten Oberfläche des Referenzobjekts oder Messobjekts, um dessen Verkippung oder Lage festzustellen, kann entweder ein einzelner Wegmesssensor verwendet werden, der in der Lage ist, zwei bzw. drei unabhängige Messwerte an jeweils unterschiedlichen Orten zu ermitteln. Alternativ hierzu können auch zwei bzw. drei einzelne Wegmesssensoren eingesetzt werden, die jeweils einen der erforderlichen Anzahl von Messwerten - zwei oder drei - ermitteln können.

Zur Berechnung der Dicke des Referenzobjekts oder Messobjekts ist dann noch die Aufnahme eines weiteren Messwerts auf einer entgegengesetzten Oberfläche oder Seite des Referenzobjekts oder Messobjekts erforderlich. Damit kann dann eine Differenzbildung zur Berechnung des Dickenwerts vorgenommen werden.

Es gibt nun verschiedene Möglichkeiten, die Lehre der vorliegenden Erfindung in vorteilhafter Weise auszugestalten und weiterzubilden. Dazu ist einerseits auf die nachgeordneten Patentansprüche und andererseits auf die nachfolgende Erläuterung bevorzugter Ausführungsbeispiele des erfindungsgemäßen Verfahrens anhand der Zeichnung zu verweisen. In Verbindung mit der Erläuterung der bevorzugten Ausführungsbeispiele des erfindungsgemäßen Verfahrens anhand der Zeichnung werden auch im Allgemeinen bevorzugte Ausgestaltungen und Weiterbildungen der Lehre erläutert. In der Zeichnung zeigen
- Fig. 1: in einer schematischen Darstellung einen beispielhaften Messaufbau zur Durchführung eines Ausführungsbeispiels des erfindungsgemäßen Verfahrens zum Kalibrieren einer Dickenmesseinrichtung,
- Fig. 2: in einer schematischen Darstellung den Einfluss einer Verkippung eines Referenzobjekts auf die Berechnung eines Dickenwerts,
- Fig. 3: in einer schematischen Darstellung die Verwendung unterschiedlicher Sensoren zur Aufnahme zweier Messwerte auf einem Referenzobjekt oder Messobjekt,
- Fig. 4: in einer schematischen Darstellung die Verwendung unterschiedlicher Sensoren zur Aufnahme dreier Messwerte auf einem Referenzobjekt oder Messobjekt,
- Fig. 5: in einer schematischen Darstellung die Verwendung unterschiedlicher Sensoren zur Aufnahme des weiteren Messwerts im zweidimensionalen Fall,
- Fig. 6: in einer schematischen Darstellung die Verwendung eines einzelnen Sensors zur Ermittlung von Messwerten auf beiden Seiten eines Referenzobjekts,
- Fig. 7a: ein Beispiel eines Referenzobjekts mit einer ungleichmäßigen Oberflächenkontur und
- Fig. 7b: das Abtasten des Referenzobjekts aus Fig. 7a mit einem Laserscanner.

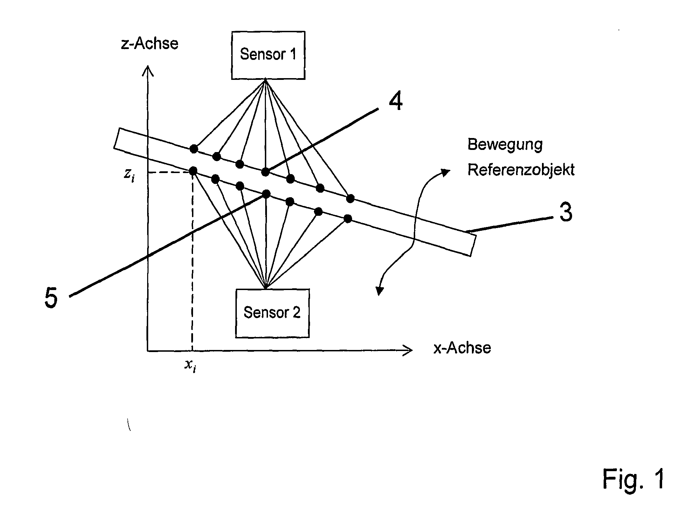

Fig. 1 zeigt in einer schematischen Darstellung ein Ausführungsbeispiel einer Messanordnung zur Durchführung des erfindungsgemäßen Verfahrens zum Kalibrieren einer Dickenmesseinrichtung. Der Aufbau weist zwei berührungslos arbeitende Wegmesssensoren 1 und 2 zur Aufnahme von jeweils mehreren Messwerten entlang einer Linie eines Referenzobjekts 3 auf, wobei das Referenzobjekt 3 mit bekannter Dicke in das Messfeld der Wegmesssensoren 1 und 2 verbracht ist. Alternativ hierzu könnten auch auf jeder Seite des Referenzobjekts 3 mehrere einzelne Sensoren angeordnet sein, die jeweils einen Messwert aufnehmen können.

Zur Bestimmung der Dicke des Referenzobjekts 3 in der Messrichtung Z entlang der z-Achse werden beispielsweise der Abstand zwischen dem Sensor 1 und einem Messpunkt 4 und der Abstand zwischen dem Sensor 2 und einem Messpunkt 5 von dem Gesamtabstand zwischen den Sensoren 1 und 2 abgezogen. Bei dieser Differenzbildung verbleibt dann die berechnete Dicke des Referenzobjekts 3 in der Messrichtung Z, welche jedoch nicht der realen Dicke des Referenzobjekts 3 in der zur Oberfläche senkrechten Richtung entspricht.

Bei dem Verfahren zum Kalibrieren einer Dickenmesseinrichtung wird zunächst das Referenzobjekt 3 innerhalb eines Teilbereichs des Messfelds bewegt, wobei die Messwerte durch die zwei Wegmesssensoren 1 und 2 in Form von Wertepaaren (xᵢ¹; zᵢ¹) und (xᵢ²; zᵢ²) zu vorgegebenen Zeitpunkten tⱼ oder in Abhängigkeit von der Position pⱼ des Referenzobjekts 3 entlang einer Linie des Referenzobjekts 3 aufgenommen werden. Aus den aufgenommenen Messwerten lässt sich die Lage der Linie auf dem Referenzobjekt 3 im Raum feststellen. Mit anderen Worten kann der Winkel der Verkippung des Referenzobjekts 3 relativ zu den Sensoren 1 und 2 festgestellt werden.

Schließlich erfolgt bei dem Verfahren ein Berechnen eines Dickenprofils durch Differenzbildung zwischen der aus den Messwerten beider Wegmesssensoren 1 und 2 zu jedem Zeitpunkt tⱼ oder in jeder Position pⱼ berechneten Dicke und der bekannten Dicke des Referenzobjekts 3. Dabei ist wesentlich, dass bei der Berechnung die Messwerte der beiden Sensoren 1 und 2 verwendet werden, die zum gleichen Zeitpunkt tⱼ oder in der gleichen Position pⱼ des Referenzobjekts 3 ermittelt worden sind. Der Index j steht für eine beliebige Anzahl von Zeitpunkten oder Positionen.

Aus den berechneten Dickenwerten werden positions- und lageabhängige Korrekturwerte in dem Teilbereich oder Messfeld erhalten, um bei einer Dickenmessung eines zu messenden Objekts geometrische Fehler und/oder die Unlinearitäten der Wegmesssensoren 1 und 2 in dem Teilbereich oder Messfeld kompensieren zu können. Im Ergebnis ergeben sich hierdurch besonders genaue Messwerte hinsichtlich der Dicke des zu messenden Objekts.

Bei dem hier gezeigten Ausführungsbeispiel findet eine Messung entlang einer Linie statt, so dass lediglich Verkippungen in Richtung der Linie berücksichtigt werden können. Diese Einschränkung ist beispielsweise bei der Messung der Dicke von durchlaufenden Bandmaterialien unkritisch, da bei diesen Bandmaterialien Verkippungen oft nur in Förderrichtung auftreten.

Allerdings kann das Verfahren auch auf beliebige Verkippungen erweitert werden, indem flächenhaft messende Sensoren verwendet werden. Hierzu könnten CCD-Kameras verwendet werden, mit denen die Lage der Oberfläche des Referenzobjekts im Raum bestimmt werden könnte. Unter Berücksichtigung der Lage der Oberfläche kann dann die Dicke des gemessenen Objekts unter Berücksichtigung des der Lage der Oberfläche zugeordneten Korrekturwerts exakt berechnet werden. Der Korrekturwert ist in jedem Fall eine mehrdimensionale Funktion, die durch die Kalibrierung ermittelt wird.

Bei der Kalibrierung muss nicht mehr wie beim Stand der Technik eine exakte Parallelführung des Referenzobjekts erfolgen, sondern es kann das Referenzobjekt in beliebigem Winkel, der sich auch ändern kann, im Messfeld oder Teilbereich des Messfelds oder zwischen den Sensoren bewegt werden. Für jeden Messpunkt eines Sensors ist ein Korrekturwert zu ermitteln.

Bei Linienscannern oder Kameras kann aufgrund der Vielzahl der Messwerte - eine Linie besteht aus vielen Punkten und eine Kamera kann eine Matrix mit vielen Pixeln aufnehmen - über statistische Methoden die Messgenauigkeit noch verbessert werden. Damit gibt es verschiedene Möglichkeiten der Dickenberechnung wie beispielsweise die Ermittlung der mittleren Dicke oder eines Dickenprofils entlang der Linie, die nicht unbedingt eine Gerade sein muss, oder in der Fläche. Ebenso ist es bei diesen Sensoren möglich, anstelle einfacher Objekte mit konstanter Dicke auch komplexe Objekte mit gewölbten oder andersartig geformten Oberflächen zu vermessen, da deren Topologie durch die linienhafte oder flächenhafte Abbildung und Messwertaufnahme erfasst werden kann.

Die Berechnung der Dicke eines zu messenden Objekts erfolgt ähnlich wie bei der Kalibrierung. Zunächst werden Messwerte von den Sensoren 1 und 2 aufgenommen, die je nach verwendetem Sensor zu Wertepaaren oder Wertetripein führen. Diese Werte müssen entweder zu festen Zeitpunkten # oder in Abhängigkeit von der Position pⱼ des Messobjekts aufgenommen werden. Dabei ist es einfacher, die zeitliche Abhängigkeit zu nutzen, da diese durch die Abtastfrequenz der Sensoren 1 und 2 im Wesentlichen vorgegeben ist. Der Nachteil hierbei ist, dass die Stützwerte bei ungleichmäßiger Bewegung des Objekts nicht äquidistant sind. Eine positionsabhängige Durchführung des Verfahrens wäre genauer, erfordert aber für besonders exakte Messungen meist einen Referenzsensor. Aus dieser Messung ergeben sich "Punktwolken" an Messwerten, die eine Ebene oder einen Raumbereich zu jedem Zeitpunkt oder zu jeder Position pⱼ abdecken. Diese Messwerte sind zunächst mit dem Linearitätsfehler der Sensoren 1 und 2 behaftet.

In einem nächsten Schritt erfolgt die Feststellung der Verkippung oder Lage des Referenzobjekts 3 oder der Linie oder Oberfläche im Raum. Anschließend kann das Dickenprofil berechnet werden, wobei die berechneten Linien, Flächen oder Freiformflächen mit den Korrekturwerten aus der Tabelle oder aus der Korrekturfunktion korrigiert werden. Vor dem Feststellen der Lage der Oberfläche im Raum könnte eine Berechnung einer idealen Linie oder Fläche aus den Messwerten zu jedem Zeitpunkt tⱼ oder zu jeder Position pⱼ erfolgen. Dies könnte bei Objekten mit gleicher Dicke durch Mittelwertbildung, Interpolation oder ähnliche andere bekannte mathematische Verfahren erfolgen. Bei Objekten mit beliebiger Oberfläche könnte ein Fit an die Oberflächenkontur erfolgen. Diese hierdurch erhaltenen idealen Linien oder Flächen könnten bei der Berechnung des Dickenprofils und der nachfolgenden Korrektur berücksichtigt werden, um beispielsweise Oberflächenrauhigkeiten des zu messenden Objekts bei der Dickenbestimmung zu kompensieren.

Bei dem erfindungsgemäßen Verfahren ist von besonderem Vorteil, dass die Messgenauigkeit bei der Dickenmessung erheblich gesteigert werden kann. Die Bewegung des Referenzobjekts 3 zwischen den Sensoren 1 und 2 muss beim Kalibrieren nicht mehr exakt parallel erfolgen, sondern kann relativ ungenau, beispielsweise auch per Hand, ohne aufwendige Parallel-Verfahreinheiten durchgeführt werden. Bei der Messung selbst wird der durch die Verkippung des Messobjekts erzeugte Messfehler eliminiert, da diese Verkippung aus Messwerten selbst berechnet werden kann. Des Weiteren können insbesondere bei mehr als zwei bzw. drei Sensoren auch Messobjekte mit nahezu beliebiger Oberflächengeometrie vermessen werden.

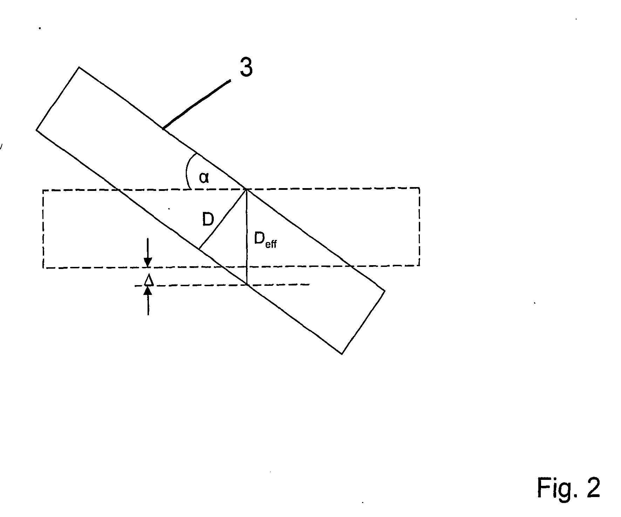

Fig. 2 zeigt in einer schematischen Darstellung den Einfluss der Verkippung auf die Dickenmessung. Durch die Verkippung eines Referenzobjekts 3 wird ein Fehler beim Kalibriervorgang verursacht, der sich dann auch auf die nachfolgenden Dickenmesswerte auswirkt. Durch die Verkippung eines Referenzobjekts 3 bekannter Dicke D um den Winkel α entsteht ein Messfehler Δ lediglich dadurch, dass die effektive Dicke des Referenzobjekts D_{eff} sich über die einfache Winkelbeziehung D_{eff} = D/cos *α* ändert. Dabei ist Δ = D_{eff} - D = D(1/ cos α - 1) der Messfehler. So verursacht beispielsweise eine Verkippung von nur 5° bereits einen Messfehler von 0,38 %. Dies ist ein erheblicher Fehler, der bei vielen Präzisionsmessungen viel zu hoch ist. Bei einer herkömmlichen Messung müssten daher sowohl das Referenzobjekt als auch das eigentliche Messobjekt exakt geführt werden, was in der Praxis häufig nicht möglich ist.

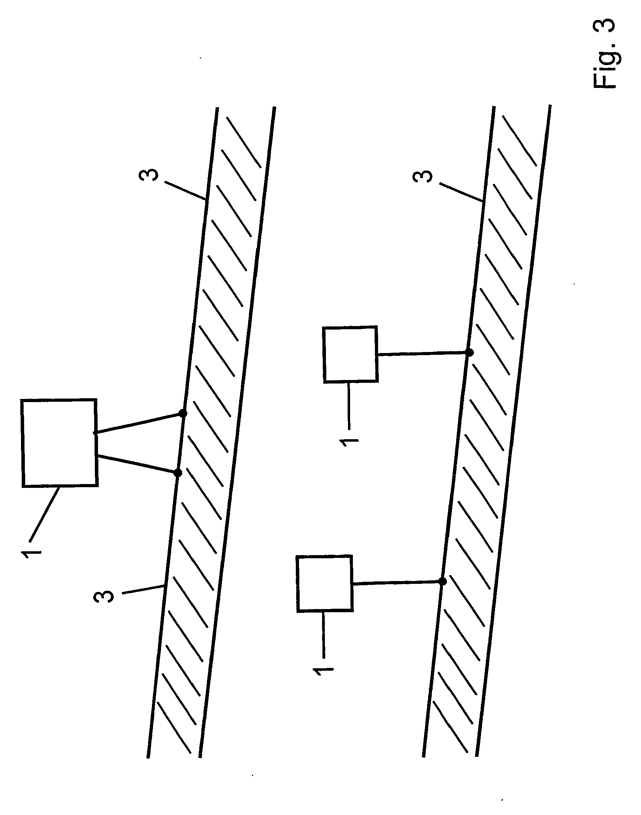

Fig. 3 zeigt in einer schematischen Darstellung die alternative Verwendung eines Sensors 1, der zur Aufnahme zweier unabhängiger Messwerte auf einem Referenzobjekt 3 geeignet ist, und zweier einzelner Sensoren 1, die jeweils einen Messwert aufnehmen können. Beide Anordnungen sind gleichermaßen geeignet, um die Lage einer Linie im Raum oder eine Verkippung zu bestimmen.

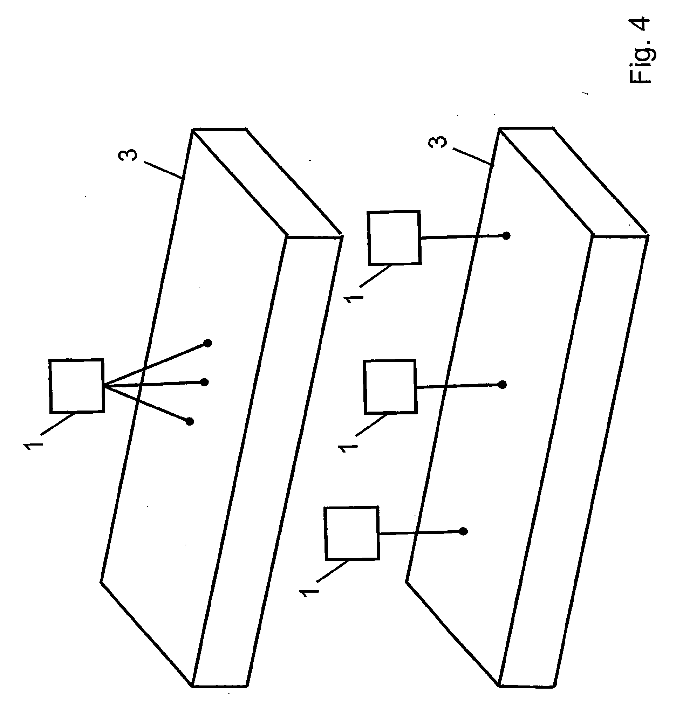

Fig. 4 zeigt in einer schematischen Darstellung die alternative Verwendung eines Sensors 1, der zur Aufnahme dreier unabhängiger Messwerte auf einem Referenzobjekt 3 geeignet ist, und dreier einzelner Sensoren 1, die jeweils einen Messwert aufnehmen können.

Bei dem in Fig. 3 gezeigten Beispiel könnte beispielsweise ein Linienscanner eingesetzt werden, der viele unabhängige Messwerte aufnehmen kann. Bei dem in Fig. 4 gezeigten Ausführungsbeispiel könnte als einzelner Sensor 1 eine Kamera mit vielen Pixeln verwendet werden, um viele Messwerte aufzunehmen.

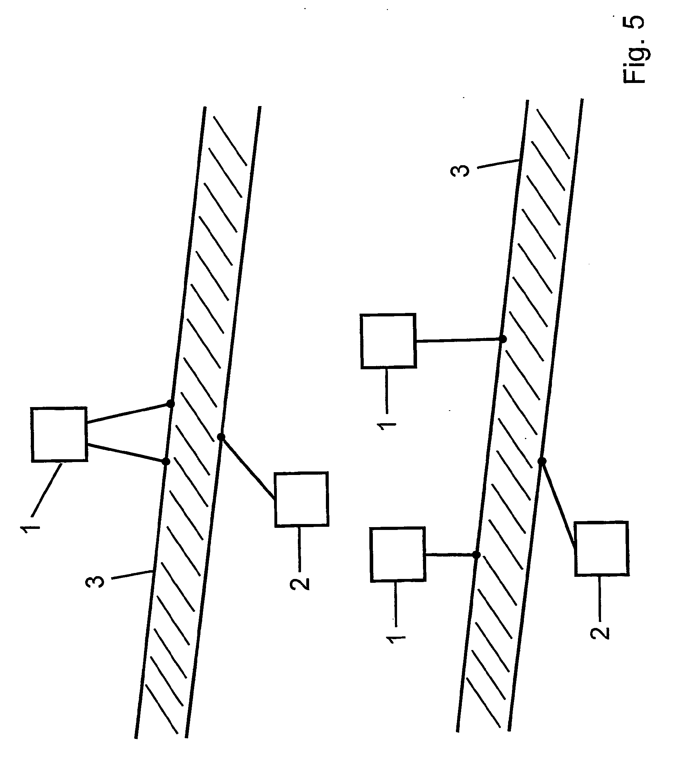

Fig. 5 zeigt in einer schematischen Darstellung die Berechnung der Dicke in einem Fall, wie er in Fig. 3 gezeigt ist. Hierbei ist die Aufnahme mindestens eines Messwerts auf der entgegengesetzten Oberfläche eines Referenzobjekts 3 mittels beispielsweise eines Sensors 2 erforderlich.

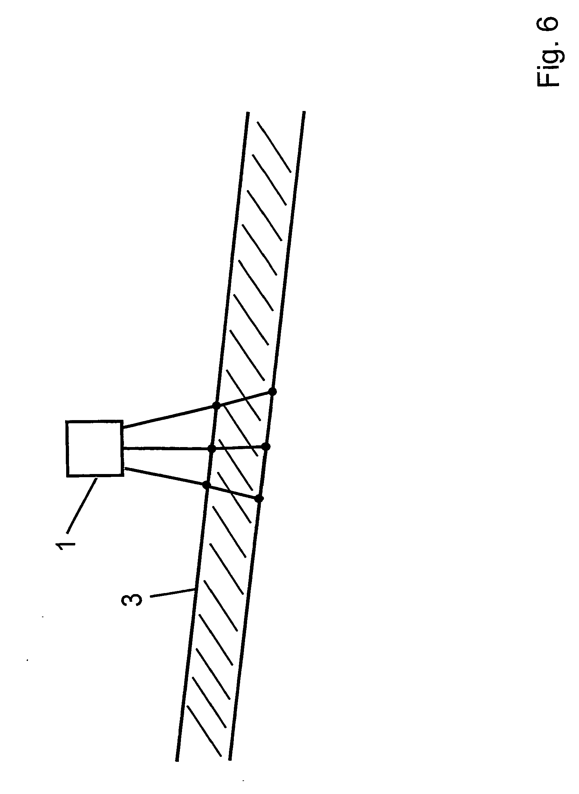

Fig. 6 zeigt in einer schematischen Darstellung die Verwendung eines Sensors 1, der Messwerte von sowohl der Oberseite als auch der Unterseite des Referenzobjekts 3 aufnehmen kann. Ein derartiger Sensor 1 könnte beispielsweise ein konfokaler Scanner sein, der bei transparenten Referenzobjekten 3 oder Messobjekten eingesetzt werden kann. Je nach Erfordernis können zwei oder drei Messwerte für den zweidimensionalen oder dreidimensionalen Fall aufgenommen werden.

Die vorangegangenen Beispiele sind für ein Referenzobjekt 3 gezeigt, das eine konstante Dicke entlang der gescannten Linie oder Fläche aufweist. Werden in diesem Fall mehr als zwei bzw. drei Messwerte aufgenommen, so erhöht dies die Genauigkeit des beschriebenen Verfahrens.

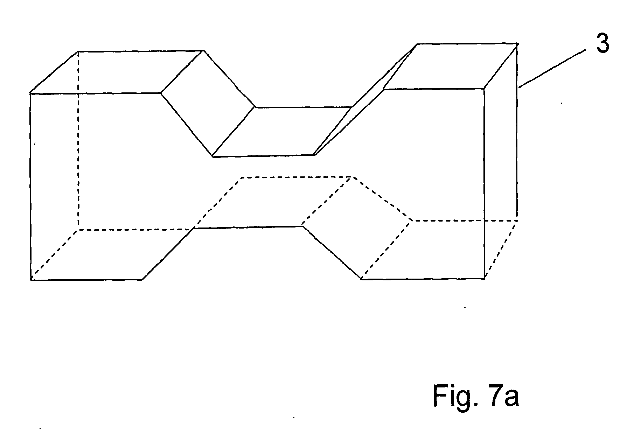

Fig. 7a zeigt in einer schematischen Darstellung ein Referenzobjekt 3 mit einer ungleichmäßigen Oberflächenkontur, die beim Einsatz in dem beschriebenen Verfahren jedoch bekannt sein muss. Die Oberflächenkontur-Daten könnten 3D-Daten sein, die beispielsweise aus einem CAD-Verfahren ermittelt worden sind. Dieses Referenzobjekt 3 weist eine charakteristische Form auf. Beispielsweise liegt hier ein auf einer Oberseite und einer Unterseite des Referenzobjekts 3 ausgebildetes "kanalähnliches" Profil vor. Mittels eines derart ausgeformten Referenzobjekts 3 könnte auch die Lage oben und unten positionierter Sensoren 1, 2 zueinander bestimmt und gegebenenfalls korrigiert werden.

Ganz allgemein ist zu sagen, dass das Referenzobjekt 3 eine beliebige Kontur aufweisen kann. Eine einfache Kontur - wie gezeigt - verringert den Rechenaufwand beim Kalibrieren. Jedoch könnte auch eine beliebige Freiformfläche verwendet werden. Diese muss lediglich bekannt sein. Beispielsweise könnte sie anderweitig vermessen oder aus CAD-Daten bekannt sein.

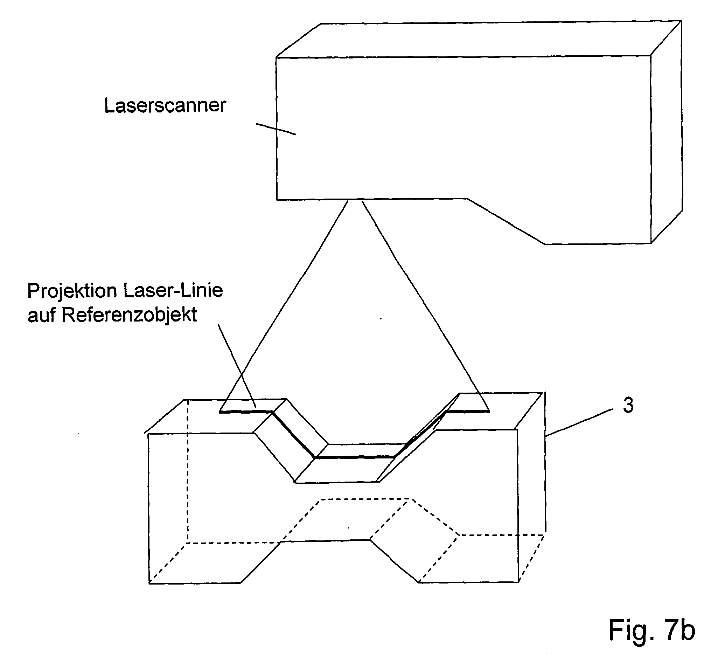

Fig. 7b zeigt das Abtasten des in Fig. 7a gezeigten Referenzobjekts 3 mit einem Laserscanner. Dabei ist die Projektionslinie der Laser-Linie auf dem Referenzobjekt 3 gezeigt. Aus der bekannten Geometrie des Referenzobjekts 3 und der gemessenen Linie kann mit dem erfindungsgemäßen Verfahren die Kennlinie des Laserscanners im Raum kalibriert werden.

Hinsichtlich weiterer vorteilhafter Ausgestaltungen des erfindungsgemäßen Verfahrens wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel des erfindungsgemäßen Verfahrens lediglich zur Erörterung der beanspruchten Lehre dienen, diese jedoch nicht auf das Ausführungsbeispiel einschränkt.

### Bezugszeichenliste

| | |
|---|---|
| 1 | Wegmesssensor |
| 2 | Wegmesssensor |
| 3 | Referenzobjekt |
| 4 | Messpunkt |
| 5 | Messpunkt |

## Patentansprüche

1. Verfahren zum Kalibrieren einer Dickenmesseinrichtung, wobei die Dickenmesseinrichtung die Dicke eines Messobjekts in einer vorgebbaren Messrichtung (Z) misst, mit mindestens einem berührungslos oder tastend arbeitenden Wegmesssensor (1, 2), wobei ein Referenzobjekt (3) mit bekannter Dicke und Form in zumindest einen Teilbereich des Messfelds des mindestens einen Wegmesssensors (1, 2) verbracht wird, mit den folgenden Verfahrensschritten:
- Aufnehmen mindestens zweier unabhängiger Messwerte durch den mindestens einen Wegmesssensor (1, 2) an mindestens zwei vorgebbaren Orten auf einer ersten Oberfläche des Referenzobjekts (3) zu vorgebbaren Zeitpunkten tⱼ oder in Abhängigkeit von vorgebbaren Positionen pⱼ des Referenzobjekts (3) im Messfeld, wobei j = 1, 2, ...;
- Feststellen der Verkippung (α) oder räumlichen Lage des Referenzobjekts (3) im Messfeld aus den aufgenommenen Messwerten zu den Zeitpunkten tⱼ oder in Abhängigkeit von den Positionen pⱼ des Referenzobjekts (3);
- Aufnehmen eines weiteren Messwerts durch den mindestens einen Wegmesssensor (1, 2) an einem in der Messrichtung (Z) gelegenen weiteren Ort auf einer der ersten Oberfläche entgegengesetzten zweiten Oberfläche oder auf einem der ersten Oberfläche entgegengesetzten Oberflächenbereich des Referenzobjekts (3), um einen Dickenwert des Referenzobjekts (3) in der Messrichtung (Z) zu ermitteln;
- Berechnen des Dickenwerts (D) des Referenzobjekts (3) aus den Messwerten des mindestens einen Wegmesssensors (1, 2) zu den Zeitpunkten tⱼ oder in den Positionen pⱼ in der Messrichtung (Z), so dass die festgestelle Verkippung berücksichtigt wird;
- Berechnen der Differenz zwischen dem berechneten Dickenwert und der bekannten Dicke des Referenzobjekts (3) zum Erhalt von positions- und verkippungs- oder lageabhängigen Korrekturwerten in dem Teilbereich oder Messfeld, um bei einer Dickenmessung geometrische Fehler und/oder Unlinearitäten des mindestens einen Wegmesssensors (1, 2) in dem Teilbereich oder Messfeld kompensieren zu können.

2. Verfahren nach Anspruch 1, **dadurch gekennzeichnet, dass** das Referenzobjekts (3) innerhalb zumindest eines Teilbereichs des Messfelds bewegt wird.

3. Verfahren nach Anspruch 1 oder 2, **dadurch gekennzeichnet, dass** die Messwerte in Form von Wertepaaren ((xᵢ¹; zᵢ¹), (xᵢ²; zᵢ²)) bei Feststellung der Verkippung des Referenzobjekts (3) in einer vorgebbaren Ebene oder in Form von Wertetripeln ((xᵢ¹; yᵢ¹; zᵢ¹), (xᵢ²; yᵢ²; zᵢ²)) bei Feststellung der dreidimensionalen räumliche Lage des Referenzobjekts (3) aufgenommen werden, wobei der obige Index eine Sensor-Nummer und der untere Index (i) eine laufende Messwert-Nummer bezeichnen.

4. Verfahren nach einem der Ansprüche 1 bis 3, **dadurch gekennzeichnet, dass** die Kompensation geometrischer Fehler die Kompensation eines Winkelfehlers, der insbesondere bei Lasersensoren bei seitlichem Auftreffen auf das Referenzobjekt (3) auftritt, umfasst.

5. Verfahren nach einem der Ansprüche 1 bis 4, **dadurch gekennzeichnet, dass** die Aufnahme der Messwerte entlang einer Linie oder Fläche oder Form des Referenzobjekts (3) erfolgt, wobei
das Feststellen der Verkippung oder Lage des Referenzobjekts (3) das Feststellen der Verkippung oder Lage der Linie oder Fläche umfassen kann und/oder in absoluten Koordinaten und/oder relativ zu mindestens einem der Wegmesssensoren (1, 2) erfolgen kann und/oder die Bestimmung eines Kippwinkels umfassen kann, um den das Referenzobjekt (3) relativ zu einem Wegmesssensor (1, 2) geneigt ist und/oder anhand der aufgenommenen Messwerte selbst erfolgen kann.

6. Verfahren nach einem der Ansprüche 1 bis 5, **dadurch gekennzeichnet, dass** die Korrekturwerte in einem Speicher gespeichert werden und/oder
als Funktion hinterlegt werden.

7. Verfahren nach einem der Ansprüche 1 bis 6, **dadurch gekennzeichnet, dass** vor dem Feststellen der Verkippung oder Lage des Referenzobjekts (3) eine ideale Linie g¹(xᵢ¹; zᵢ¹) und/oder g²(xᵢ²; zᵢ²) oder ideale Fläche f¹(xᵢ¹, yᵢ¹; zᵢ¹) und/oder f²(xᵢ²; yᵢ²; zᵢ²) aus den Messwerten zu jedem Zeitpunkt tⱼ oder in jeder Position pⱼ berechnet wird, wobei
die Berechnung der idealen Linien und/oder Flächen durch Mittelwertbildung oder Interpolation erfolgen kann und/oder wobei zur Berechnung der Dicke aus den Messwerten die idealen Linien und/oder Flächen zugrunde gelegt oder verwendet werden können.

8. Verfahren nach einem der Ansprüche 1 bis 7, **dadurch gekennzeichnet, dass** als mindestens ein Wegmesssensor (1, 2) ein Linienscanner oder ein konfokaler Scanner oder eine Kamera verwendet wird.

9. Verfahren nach einem der Ansprüche 1 bis 8, **dadurch gekennzeichnet, dass** aus den ermittelten Korrekturwerten die Korrekturwerte für Zwischenbereiche linear interpoliert werden.

10. Verfahren nach einem der Ansprüche 1 bis 9, **dadurch gekennzeichnet, dass** jeweils mindestens ein Wegmesssensor (1, 2) auf zwei verschiedenen Seiten des Referenzobjekts (3) angeordnet wird oder
dass mindestens zwei Wegmesssensoren (1, 2) nebeneinander auf einer Seite des Referenzobjekts (3) angeordnet werden.

11. Verfahren nach einem der Ansprüche 1 bis 10, **dadurch gekennzeichnet, dass** das Referenzobjekt (3) eine konstante Dicke aufweist, und/oder wobei
das Referenzobjekt (3) eine komplexe Form mit vorzugsweise variierender Dicke aufweisen kann.

12. Verfahren nach einem der Ansprüche 1 bis 11, **dadurch gekennzeichnet, dass** über die bekannte Geometrie des Referenzobjekts (3) Fehlstellungen der Wegmesssensoren (1, 2) bestimmt werden.

13. Verfahren nach einem der Ansprüche 1 bis 12, **dadurch gekennzeichnet, dass** - mit einem geeignet strukturierten Referenzobjekt (3) - die relative Lage mindestens zweier Wegmesssensoren zueinander oder zum Referenzobjekt (3) bestimmt wird.

## Claims

1. Method for calibrating a thickness measuring device, the thickness measuring device measuring the thickness of a measuring object in a predeterminable measurement direction (Z), having at least one displacement measurement sensor (1, 2) which operates in a contactless or touching manner, a reference object (3) of known thickness and shape being moved into at least a part-region of the measurement field of the at least one displacement measurement sensor (1, 2), having the following method steps:
- recording at least two independent measurement values by means of the at least one displacement measurement sensor (1, 2) at least at two predeterminable locations on a first surface of the reference object (3) at predeterminable times tⱼ or in accordance with predeterminable positions pⱼ of the reference object (3) in the measurement field, with j = 1, 2, ...,
- determining the tilting (α) or spatial attitude of the reference object (3) in the measurement field from the measurement values recorded at the times tⱼ or in accordance with the positions pⱼ of the reference object (3);
- recording another measurement value by means of the at least one displacement measurement sensor (1, 2) at another location in the measurement direction (Z), on a second surface opposite the first surface or on a surface region of the reference object (3) opposite the first surface, in order to establish a thickness value of the reference object (3) in the measurement direction (Z);
- calculating the thickness value (D) of the reference object (3) from the measurement values of the at least one displacement measurement sensor (1, 2) at the times tⱼ or in the positions pⱼ in the measurement direction (Z), so that the determined tilting is taken into account;
- calculating the difference between the calculated thickness value and the known thickness of the reference object (3) in order to obtain position and tilting-dependent or attitude-dependent correction values in the part-region or measurement field in order to be able to compensate during a thickness measurement for geometric errors and/or occurrences of nonlinearity of the at least one displacement measurement sensor (1, 2) in the part-region or measurement field.

2. Method according to claim 1, **characterised in that** the reference object (3) is moved within at least a part-region of the measurement field.

3. Method according to claim 1 or claim 2, **characterised in that** the measurement values are recorded in the form of value pairs ((xᵢ¹; zᵢ¹), (xᵢ²; zᵢ²)) when determining the tilting of the reference object (3) in a predeterminable plane, or in the form of value triples ((xᵢ1; yᵢ1_{;} zᵢ¹⁾) , (xᵢ²; yᵢ²_{;} zᵢ²)) when determining the three-dimensional spatial attitude of the reference object (3), the upper index referring to a sensor number and the lower index (i) referring to a continuous measurement value number.

4. Method according to any one of claims 1 to 3, **characterised in that** the compensation for geometric errors comprises the compensation for an angular error, which occurs in particular with laser sensors when the reference object (3) is struck at the side.

5. Method according to any one of claims 1 to 4, **characterised in that** the recording of the measurement values is carried out along a line or face or shape of the reference object (3),
the determination of the tilting or attitude of the reference object (3) may comprise the determination of the tilting or attitude of the line or face and/or may be carried out in absolute coordinates and/or relative to at least one of the displacement measurement sensors (1, 2), and/or may comprise the determination of a tilting angle, through which the reference object (3) is inclined relative to a displacement measurement sensor (1, 2), and/or may be carried out with reference to the measurement values recorded themselves.

6. Method according to any one of claims 1 to 5, **characterised in that** the correction values are stored in a store and/or are saved as a function.

7. Method according to any one of claims 1 to 6, **characterised in that**, before the determination of the tilting or attitude of the reference object (3), an ideal line g¹(xᵢ¹; zᵢ1) and/or g²(xᵢ²; zᵢ²) or ideal face f¹ (xᵢ¹; yᵢ¹; zᵢ¹⁾) and/or f² (xᵢ,²; yᵢ²; zᵢ²) is calculated from the measurement values at each time tⱼ or in each position pⱼ, the calculation of the ideal lines and/or faces being able to be carried out by means of mean value formation or interpolation and/or the ideal lines and/or faces being able to be taken as a basis or used in order to calculate the thickness from the measurement values.

8. Method according to any one of claims 1 to 7, **characterised in that** a line scanner or a confocal scanner or a camera is used as at least one displacement measurement sensor (1, 2).

9. Method according to any one of claims 1 to 8, **characterised in that** the correction values for intermediate regions are linearly interpolated from the determined correction values.

10. Method according to any one of claims 1 to 9, **characterised in that** at least one displacement measurement sensor (1, 2) is arranged at two different sides of the reference object (3), respectively, or
**in that** at least two displacement measurement sensors (1, 2) are arranged beside each other at one side of the reference object (3).

11. Method according to any one of claims 1 to 10, **characterised in that** the reference object (3) has a constant thickness, and/or wherein the reference object (3) may have a complex shape preferably with varying thickness.

12. Method according to any one of claims 1 to 11, **characterised in that** incorrect positions of the displacement measurement sensors (1, 2) are determined via the known geometry of the reference object (3).

13. Method according to any one of claims 1 to 12, **characterised in that** - with an appropriately structured reference object (3) - the relative attitude of at least two displacement measurement sensors is determined with respect to each other or with respect to the reference object (3).

## Revendications

1. Procédé d'étalonnage d'un appareil servant à mesurer l'épaisseur, dans lequel l'appareil servant à mesurer l'épaisseur mesure l'épaisseur d'un objet de mesure dans une direction de mesure (Z) pouvant être prédéterminée, comprenant au moins un capteur de mesure de déplacement (1, 2) fonctionnant sans contact ou en tâtant, dans lequel un objet de référence (3) ayant une épaisseur et une forme connues est amené dans au moins une zone partielle du champ de mesure de l'au moins un capteur de mesure de déplacement (1, 2), comprenant les étapes de procédé suivantes :
- la prise d'au moins deux valeurs de mesure indépendantes par l'au moins un capteur de mesure de déplacement (1, 2) à au moins deux endroits pouvant être prédéterminés sur une première surface de l'objet de référence (3) à des moments pouvant être prédéterminés tⱼ ou en fonction de positions pⱼ pouvant être prédéterminées de l'objet de référence (3) dans le champ de mesure, étant entendu que j=1,2,...;
- la constatation du culbutage (α) ou de la position spatiale de l'objet de référence (3) dans le champ de mesure à partir des valeurs de mesure prises aux moments tⱼ ou en fonction des positions pᵢ de l'objet de référence (3) ;
- la prise d'une valeur de mesure supplémentaire par l'au moins un capteur de mesure de déplacement (1, 2) à un autre endroit situé dans la direction de mesure (Z) sur une deuxième surface opposée à la première surface ou sur une zone de surface opposée à la première surface de l'objet de référence (3) afin de déterminer une valeur d'épaisseur de l'objet de référence (3) dans la direction de mesure (Z) ;
- le calcul de la valeur de l'épaisseur (D) de l'objet de référence (3) à partir des valeurs de mesure de l'au moins un capteur de mesure de déplacement (1, 2) aux moments tⱼ ou aux positions pⱼ dans la direction de mesure (Z) de telle sorte que le culbutage constaté est pris en considération;
- le calcul de la différence entre la valeur de l'épaisseur calculée et l'épaisseur connue de l'objet de référence (3) en vue d'obtenir des valeurs de correction dépendantes de la position et du culbutage ou de la position dans la zone partielle ou le champ de mesure afin de pouvoir compenser, dans une mesure de l'épaisseur, des erreurs géométriques et/ou des écarts de linéarité de l'au moins un capteur de mesure de déplacement (1, 2) dans la zone partielle ou le champ de mesure.

2. Procédé selon la revendication 1, **caractérisé en ce que** l'objet de référence (3) est déplacé à l'intérieur d'au moins une zone partielle du champ de mesure.

3. Procédé selon la revendication 1 ou 2, **caractérisé en ce que** les valeurs de mesure sont prises sous la forme de paires de valeurs ((xᵢ¹ ; _{Z}¡¹), (xᵢ² ; zᵢ²)) lors de la constatation du culbutage de l'objet de référence (3) dans un plan pouvant être prédéterminé ou sous la forme de triplets de valeurs ((xᵢ¹ ; yᵢ¹; z¡¹), (xᵢ²; yᵢ² ; zᵢ²)) lors de la constatation de la position spatiale tridimensionnelle de l'objet de référence (3), étant entendu que l'indice supérieur désigne un numéro de capteurs et l'indice inférieur (i) désigne un numéro courant de valeur de mesure.

4. Procédé selon l'une des revendications 1 à 3, **caractérisé en ce que** la compensation d'erreurs géométriques comprend la compensation d'une erreur d'angle qui survient en particulier avec des capteurs laser lors de l'incidence latérale sur l'objet de référence (3).

5. Procédé selon l'une des revendications 1 à 4, **caractérisé en ce que** la prise des valeurs de mesure est réalisée le long d'une ligne ou d'une surface ou d'une forme de l'objet de référence (3), étant entendu que :
- la constatation du culbutage ou de la position de l'objet de référence (3) peut comprendre la constatation du culbutage ou de la position de la ligne ou de la surface et/ou peut être réalisée en coordonnées absolues et/ou par rapport à au moins l'un des capteurs de mesure de déplacement (1, 2) et/ou peut comprendre la détermination d'un angle de culbutage dont l'objet de référence (3) est incliné par rapport à un capteur de mesure de déplacement (1, 2) et/ou peut être réalisée sur la base des valeurs de mesure prises elles-mêmes.

6. Procédé selon l'une des revendications 1 à 5, **caractérisé en ce que** les valeurs de correction sont enregistrées dans une mémoire et/ou enregistrées comme fonction.

7. Procédé selon l'une des revendications 1 à 6, **caractérisé en ce qu'**avant la constatation du culbutage ou de la position de l'objet de référence (3), une ligne idéale g¹(x_{¡}¹ ; zᵢ¹) et/ou g²(xᵢ²; zᵢ²) ou une surface idéale f¹(xᵢ¹; yᵢ¹; zᵢ¹) et/ou f²(xᵢ² yᵢ² ; zᵢ²) est calculée à partir des valeurs de mesure à chaque moment tⱼ ou dans chaque position pⱼ, étant entendu que :
- le calcul des lignes et/ou des surfaces idéales peut être réalisé par une formation de valeur moyenne ou une interpolation et/ou étant entendu qu'aux fins du calcul de l'épaisseur à partir des valeurs de mesure, les lignes et/ou les surfaces idéales peuvent servir de base et/ou être utilisées.

8. Procédé selon l'une des revendications 1 à 7, **caractérisé en ce qu'**un scanner à ligne ou un scanner à foyer commun ou une caméra sont utilisés comme au moins un capteur de mesure de déplacement (1, 2).

9. Procédé selon l'une des revendications 1 à 8, **caractérisé en ce qu'**à partir des valeurs de correction déterminées, les valeurs de correction sont interpolées de façon linéaire pour des zones intermédiaires.

10. Procédé selon l'une des revendications 1 à 9, **caractérisé en ce qu'**au moins un capteur de mesure de déplacement (1, 2) respectif est agencé sur deux côtés différents de l'objet de référence (3) ou
- **en ce qu'**au moins deux capteurs de mesure de déplacement (1, 2) sont agencés l'un à côté de l'autre sur un côté de l'objet de référence (3).

11. Procédé selon l'une des revendications 1 à 10, **caractérisé en ce que** l'objet de référence (3) présente une épaisseur constante, et/ou dans lequel:
- l'objet de référence (3) peut présenter une forme complexe avec de préférence un épaisseur variable.

12. Procédé selon l'une des revendications 1 à 11, **caractérisé en ce que** des fausses positions des capteurs de mesure de déplacement (1, 2) sont déterminées sur la géométrie connue de l'objet de référence (3).

13. Procédé selon l'une des revendications 1 à 12, **caractérisé en ce qu'**avec un objet de référence (3) structuré de façon appropriée, la position relative d'au moins deux capteurs de mesure de déplacement l'un par rapport à l'autre ou par rapport à l'objet de référence (3) est déterminée.
